# FASCICULE DE BREVET EUROPEEN

(11) **EP 0 836 572 B1**
(45) Date de publication et mention de la délivrance du brevet: **03.03.1999**
(21) Numéro de dépôt: 96924914.3
(22) Date de dépôt: 02.07.1996
(51) Int. Cl.: B65B 39/00, F16K 31/08

(54) **BEC DE REMPLISSAGE ET VANNE A COMMANDE MAGNETIQUE**
FÜLLROHR UND MAGNETISCH BETÄTIGTES VENTIL
FILLING SPOUT AND MAGNETICALLY CONTROLLED VALVE

(30) Priorité: 05.07.1995 FR 9508107
(43) Date de publication de la demande: 22.04.1998
(73) Titulaire: S.E.R.A.C. GROUP, 72400 La Ferte-Bernard (FR)
(72) Inventeur: GRAFFIN, André, F-72400 La Chapelle-du-Bois (FR)
(74) Mandataire: Fruchard, Guy
(86) Numéro de dépôt international: FR9601022
(87) Numéro de publication internationale: WO9702180

(56) Documents cités:
- EP-A- 0 329 287
- EP-A- 0 436 214
- DE-A- 2 001 143
- US-A- 3 612 363
- US-A- 5 039 061
- US-A- 5 129 619

## Description

La présente invention concerne un dispositif de commande magnétique d'un organe d'obturation monté mobile dans un corps de vanne tubulaire en regard d'un un orifice d'écoulement de ce corps, ce dispositif comportant un organe de manoeuvre en matériau magnétique attelé à l'organe d'obturation et coopérant avec un générateur de champ magnétique relié à un organe de commandé.

Un tel dispositif est connu par le document US-A-5129 619.

On connaît de nombreux dispositifs permettent d'actionner un organe d'obturation dans une vanne ou un bec de remplissage d'une machine de conditionnement. Ces dispositifs comportent généralement un organe de commande passant à travers la paroi du bec de remplissage, de sorte qu'il est nécessaire d'assurer une étanchéité entre la paroi du bec de remplissage et l'organe de commande afin que le produit à conditionner ne s'échappe pas.

Cette étanchéité pose des problèmes délicats, en particulier lorsque le produit à conditionner est abrasif ou chimiquement agressif car les mouvements de l'organe de commande entraînent un risque de détérioration rapide des joints. Des problèmes importants se posent également dans le cas des produits devant être conditionnés de façon stérile, en raison de la pollution qui risque d'être apportée par l'organe de commande traversant la paroi du bec de remplissage : il est alors nécessaire de prévoir des dispositifs complexes utilisant des barrières de vapeur ou de fluide stérile, ou des membranes qui sont fragiles. Afin d'éviter la traversée de la paroi du bec de remplissage par un organe de commande, il est connu des documents US-A-4 940 207 et EP-A-436 214 un dispositif de commande magnétique d'un organe d'obturation monté dans un corps de vanne tubulaire pour coulisser en regard d'un orifice d'écoulement de ce corps. Ce dispositif comporte un noyau magnétique cylindrique plein attelé au clapet et disposé coaxialement au corps de vanne tubulaire qui est réalisé en un matériau amagnétique. La position de ce noyau est commandée depuis l'extérieur du corps par un générateur de champ magnétique. Un tel dispositif présente toutefois l'inconvénient que le produit à distribuer s'écoule entre le noyau magnétique et le corps tubulaire. Ceci implique une restriction de l'écoulement si l'on souhaite limiter la distance entre le noyau magnétique et le générateur de champ magnétique afin d'obtenir une force de soulèvement suffisante du clapet. En outre le nettoyage des parois est rendu difficile surtout dans le cas de produits chargés ou pulpeux. De plus, l'écoulement de produits visqueux est rendu difficile en raison d'un effet de paroi.

Afin de remédier à cet inconvénient, il a été proposé un dispositif de commande magnétique dans lequel le noyau magnétique est réalisé sous la forme d'une bague reliée à l'organe d'obturation par des bras de liaison permettant un écoulement à travers la bague. On obtient ainsi une force d'attraction magnétique suffisante sans restreindre l'écoulement. Toutefois, ce dispositif ne donne pas entière satisfaction dans le cas où l'on souhaite conserver un écoulement laminaire à l'intérieur du corps tubulaire car la bague de manoeuvre du clapet et surtout les bras de liaison perturbent cet écoulement.

Selon l'invention, on propose un dispositif de commande magnétique d'un organe d'obturation monté mobile dans un corps tubulaire en regard d'un orifice d'écoulement de ce corps, ledit dispositif étant caractérisé par le fait que le générateur de champ magnétique est monté à l'intérieur d'un manchon en matériau amagnétique solidaire du corps tubulaire, le manchon s'étendant de façon sensiblement axiale au corps tubulaire et ayant une extrémité fermée et une extrémité opposée débouchant à l'extérieur du corps tubulaire, et que l'organe de manoeuvre est disposé à l'extérieur du manchon en regard du générateur de champ magnétique.

Ainsi, la commande du clapet s'effectue dans le centre du corps tubulaire, de sorte que la régularité de l'écoulement contre la face interne de ce corps n'est perturbée par aucun obstacle transversal à l'écoulement. De plus, l'étanchéité est assurée entre des pièces fixes, l'intérieur du manchon étant totalement isolé de l'écoulement à l'intérieur du corps tubulaire. En outre, la puissance du champ magnétique nécessaire est faible car la paroi du manchon peut être très fine, de sorte que l'encombrement du générateur de champ magnétique et de l'organe de manoeuvre associé est réduit.

Selon un mode de réalisation préféré, l'organe de manoeuvre comporte deux bagues montées coulissantes sur le manchon et reliées par un organe de liaison s'étendant selon une direction axiale, le générateur de champ magnétique étant agencé de façon à engendrer un champ de direction axiale, et possédant deux extrémités axiales en regard desquelles sont disposées les bagues de l'organe de manoeuvre.

On crée ainsi une boucle magnétique, le champ magnétique issu d'une des extrémités axiales du générateur de champ magnétique étant canalisé par l'organe de liaison axial en direction de l'extrémité de polarité opposée du générateur.

Avantageusement alors, l'une des bagues de l'organe de manoeuvre forme l'organe d'obturation.

L'invention a également pour objet un bec de remplissage à débit réglable comportant un corps tubulaire ayant un orifice d'écoulement terminal associé à un premier organe d'obturation formant un clapet, et dans lequel un orifice d'écoulement amont délimité par une restriction intermédiaire du corps tubulaire est associé à un second organe d'obturation formant un organe de régulation de débit, les premier et second organes d'obturation sont commandés par un dispositif de commande magnétique comportant des organes de manoeuvre en matériau magnétique coopérant avec des générateurs de champ magnétique, les générateurs de champ magnétique sont montés à l'intérieur d'un manchon Solidaire du corps tubulaire, le manchon s'étend de façon sensiblement axiale au corps tubulaire et à une extrémité fermée et une extrémité opposée débouchant à l'extérieur du corps tubulaire et les organes de manoeuvre sont montés coulissant sur le manchon en regard des générateurs de champ magnétique correspondants.

Avantageusement alors, l'organe de commande l'un des deux générateurs de champ magnétique est monté coulissant dans l'organe de commande de l'autre générateur de champ magnétique.

D'autres caractéristiques et avantages de l'invention apparaîtront à la lecture de la description qui suit d'un mode de réalisation particulier non limitatif en liaison avec les figures en annexe, parmi lesquelles :
- la figure 1 est une vue en coupe axiale d'un bec de remplissage à débit réglable comportant un dispositif de commande magnétique conforme à l'invention, le clapet étant en position de fermeture et l'organe de régulation de débit étant en position d'ouverture partielle;
- la figure 2 est une vue agrandie de l'encadré II de la figure 1

En référence aux figures, le bec de remplissage à débit réglable et à commande magnétique selon l'invention comporte un corps de vanne tubulaire 1 comprenant une partie supérieure 1.1 raccordée à un tube l'alimentation transversal 3, une partie intermédiaire 1.2 comportant une restriction 4 comprenant une paroi interne conique 6 ayant un orifice d'écoulement 46 et en regard de laquelle est disposé un organe de régulation de débit 45, et une partie inférieure 1.3 comportant un orifice d'écoulement inférieur 9 formant un siège pour un clapet 11. Les trois parties 1.1, 1.2 et 1.3 sont démontables et reliées entre elles par des raccords rapides 10.

Le clapet 11 est commandé par un dispositif de commande magnétique selon l'invention. Ce dispositif comporte un organe de manoeuvre 13 en matériau de haute perméabilité magnétique attelé au clapet 11. Cet organe de manoeuvre comporte un organe de liaison formé ici par une pluralité de barreaux 15, par exemple en acier inoxydable magnétique, fixés par leur extrémité inférieure au clapet 11, de telle sorte que les axes des barreaux 15 soient régulièrement répartis sur un cylindre coaxial au corps de vanne tubulaire 1. A leur extrémité opposée au clapet, les barreaux de liaison 15 sont reliés à des bagues 19 en matériau de haute perméabilité magnétique. Ces bagues 19, qui sont au nombre de quatre dans le mode de réalisation illustré, sont montées pour coulisser sur un manchon 21 en matériau amagnétique solidaire du corps de vanne 1 et s'étendant coaxialement à ce corps, à l'intérieur de celui-ci. Le manchon 21 est obturé à son extrémité inférieure par une paroi terminale 24. A son extrémité supérieure, le manchon 21 est fixé à l'extrémité supérieure du corps tubulaire 1, par exemple par soudage et débouche à l'extérieur du corps tubulaire 1.

Le dispositif de commande magnétique du clapet 11 comporte de plus un générateur de champ magnétique ici réalisé sous la forme de quatre aimants permanents 33 montés par paire à l'intérieur du manchon 21 pour coopérer avec l'organe de manoeuvre 13. Les extrémités axiales de chaque paire d'aimants 33 sont de polarités opposées.

Les aimants 33 sont montés sur une tige de commande 35 de part et d'autre d'une entretoise 37 séparant les deux paires d'aimants 33. Le générateur de champ magnétique constitué par les aimants 33 est attelé à la tige de commande 35 et peut donc coulisser à l'intérieur du manchon sous l'effet d'un effort exercé sur cette tige. A l'extérieur du corps tubulaire 1 la tige de commande 35 est reliée à un dispositif d'actionnement non représenté.

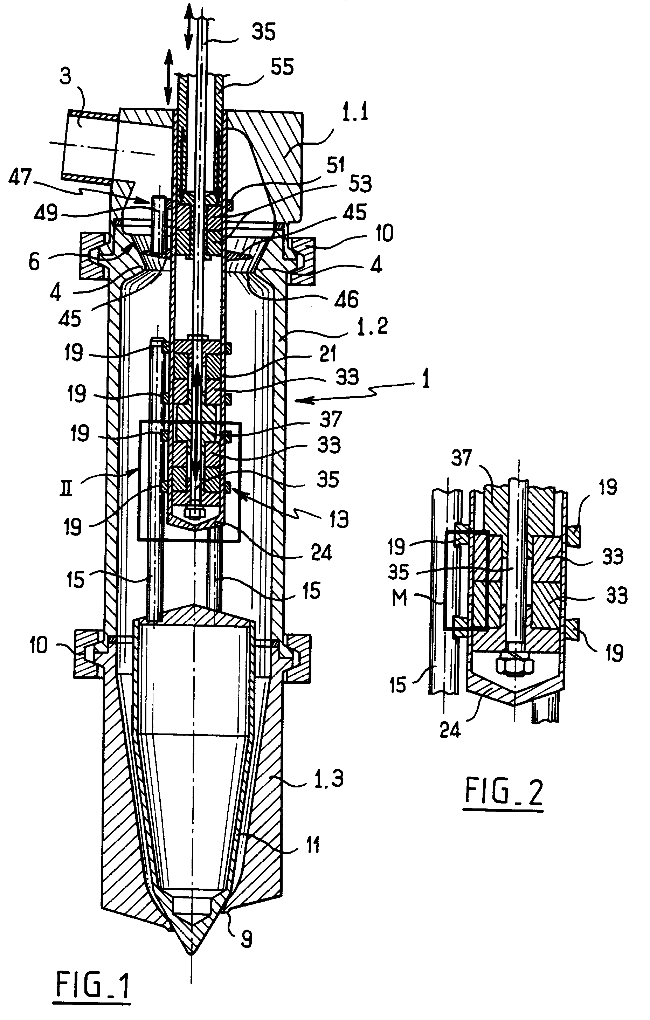

Pour optimiser la liaison magnétique entre les aimants 33 et l'organe de manoeuvre 13, les bagues 19 sont au nombre de quatre et sont disposées par paires en regard de chacune des extrémités axiales de chaque paire d'aimants. De cette manière, les aimants 33 engendrent selon une direction axiale un champ magnétique qui est canalisé, par l'intermédiaire des bagues 19, à l'intérieur des barreaux de liaison 15. Les extrémités de chaque paire d'aimants 33 étant de polarités opposées, il se crée ainsi une boucle de champ magnétique, comme cela est symbolisé par les traits gras M de la figure 2. On obtient ainsi un couplage magnétique optimum permettant une miniaturisation du générateur de champ magnétique et de l'organe de manoeuvre.

L'organe de régulation de débit 45 est commandé par un dispositif de commande magnétique selon l'invention analogue au dispositif commandant le clapet 11 et comprenant un organe de manoeuvre généralement désigné en 47. Dans le mode de réalisation illustré l'organe de régulation de débit 45 est formé par une bague en matériau à haute perméabilité magnétique qui joue le rôle de l'une des bagues 19 de l'organe de manoeuvre 13 du clapet 11. De même que pour l'organe de manoeuvre 13, l'organe de manoeuvre 47 comporte une pluralité de barreaux de liaison 49, dont un seul est représenté sur la figure, solidaires de l'organe d'obturation 45 et disposées selon un cylindre coaxial au manchon 21. A leur extrémité opposée à l'organe d'obturation 45, les barreaux 49 sont reliées à une bague 51 en matériau de haute perméabilité magnétique qui est montée pour coulisser sur le manchon 21. Un générateur de champ magnétique constitué par deux aimants 53 est monté pour coulisser à l'intérieur du manchon 21 en regard de l'organe de manoeuvre 47. Les deux aimants 53 sont disposés de manière à engendrer un champ magnétique s'étendant selon une direction axiale. De même que précédemment, on obtient ainsi un bouclage magnétique circulant entre les extrémités de la paire d'aimants 53 via la bague 51, les barreaux de liaison 49 et l'organe d'obturation de débit 45.

La paire d'aimants 53 est en outre attelée à un tube de commande 55 qui est monté coulissant dans le manchon 21 et s'étend au-delà de l'extrémité supérieure de ce manchon. En l'espèce, la paire d'aimants 53 est emmanchée sur une partie inférieure de petit diamètre du tube de commande 55 et immobilisée entre un épaulement supérieur et un circlips fixé sur l'extrémité inférieure du tube de commande 55.

Le tube de commande 55 est traversé par la tige de commande 35 associée au clapet 11.

En service, l'ouverture ou la fermeture de l'orifice d'écoulement terminal 9 est obtenue en agissant sur le clapet 11 par l'intermédiaire de la tige de commande 35 : un effort de traction exercé sur cette tige provoque le coulissement vers le haut du générateur de champ magnétique constitué par les aimants 33 à l'intérieur du manchon 21 et, du fait du couplage magnétique entre ces aimants et l'organe de manoeuvre 13, un soulèvement du clapet 11 attelé à cet organe de manoeuvre. Lorsque la tige de commande 35 est actionnée vers le bas, le dispositif de commande magnétique associé entraîne le clapet 11 vers le bas et vient appliquer celui-ci sur le siège 9.

Parallèlement, le réglage du débit de l'écoulement est réalisé en agissant sur la position de l'organe de régulation de débit 45 par l'intermédiaire du tube de commande 55 selon un fonctionnement analogue à celui qui vient d'être décrit à propos de la tige de commande 35.

Cette commande magnétique permet de réaliser un bec de remplissage ne comportant aucun joint d'étanchéité sur des pièces mobiles et dépourvu d'organes s'étendant en travers de l'écoulement.

L'invention n'est pas limitée au mode de réalisation qui vient d'être décrit mais englobe au contraire toute variante reprenant, avec des moyens équivalents, les caractéristiques essentielles telles que revendiquées. Par exemple, bien qu'il ait été décrit un générateur de champ magnétique réalisé sous la forme d'une ou plusieurs paires d'aimants, il est également possible de réaliser ce générateur sous toute autre forme. En particulier, on pourra prévoir d'utiliser un générateur à électro-aimant actionnable électriquement, ce générateur pouvant être coulissant à l'intérieur du manchon et relié à un organe d'actionnement débouchant à l'extérieur du corps tubulaire comme dans le cas d'un générateur à aimants décrit précédemment, ou encore fixe à l'intérieur du manchon pour provoquer, lorsqu'il est excité par un courant électrique, le soulèvement de l'organe de manoeuvre du clapet. On peut également remplacer les bagues en matériau à haute perméabilité magnétique par des aimants.

Bien que l'organe de liaison ait été illustré sous forme de barreaux cylindriques, ce qui permet tout à la fois d'alléger l'organe de manoeuvre et d'assurer son nettoyage par un écoulement entre les barreaux, on peut également réaliser celui-ci sous forme d'un manchon reliant les bagues.

Bien que l'invention ait été décrite en relation avec un bec de remplissage comportant deux organes d'obturation, c'est-à-dire un organe de régulation de débit et un clapet, on peut également appliquer l'invention à un bec de remplissage comportant un seul organe d'obturation en particulier lorsque le bec de remplissage est relié à une alimentation basse pression.

## Revendications

1. Dispositif de commande magnétique d'un organe d'obturation (11, 45) monté mobile dans un corps de vanne tubulaire (1) en regard d'un orifice d'écoulement (9, 46) de ce corps, ce dispositif comportant un organe de manoeuvre (13, 47) en matériau magnétique attelé à l'organe d'obturation (11, 45) et coopérant avec un générateur de champ magnétique (33, 53) relié à un organe de commande (35, 55), caractérisé en ce que le générateur de champ magnétique (33, 53) est monté à l'intérieur d'un manchon en matériau amagnétique (21) solidaire du corps tubulaire (1), en ce que le manchon (21) s'étend de façon sensiblement axiale au corps tubulaire et a une extrémité fermée et une extrémité opposée débouchant à l'extérieur du corps tubulaire (1), et en ce que l'organe de manoeuvre (13, 47) s'étend extérieurement au manchon (21) en regard du générateur de champ magnétique (33, 53).

2. Dispositif selon la revendication 1, caractérisé en ce que l'organe de manoeuvre (13, 47) comporte au moins deux bagues (19, 51, 45) montées coulissantes sur le manchon (21) et reliées par un organe de liaison (15, 49) s'étendant selon une direction axiale, le générateur de champ magnétique (33, 53) étant agencé de façon à engendrer un champ de direction axiale, et possédant deux extrémités axiales en regard desquelles sont disposées les bagues (19, 51, 45) de l'organe de manoeuvre (13, 47).

3. Dispositif selon la revendication 2, caractérisé en ce que l'une des bagues (45) de l'organe de manoeuvre (47) forme l'organe d'obturation (45).

4. Bec de remplissage à débit réglable comportant un corps tubulaire (1) ayant un orifice d'écoulement terminal (9) associé à un premier organe d'obturation formant un clapet (11), caractérisé en ce qu'il comporte un orifice d'écoulement amont (46) délimité par une restriction intermédiaire (4) du corps tubulaire (1) et associé à un second organe d'obturation formant un organe de régulation de débit (45), les premier et second organes d'obturation étant commandés par un dispositif de commande magnétique selon l'une des revendications 1 à 3.

5. Bec de remplissage selon la revendication 4, caractérisé en ce que les organes de manoeuvre (13, 47) sont montés coulissants sur le manchon (21) en regard des générateurs de champ magnétique (33, 53) correspondants.

6. Bec de remplissage selon la revendication 5, caractérisé en ce que l'organe de commande (35) de l'un (33) des deux générateurs de champ magnétique est monté coulissant dans l'organe de commande (55) de l'autre générateur de champ magnétique (53).

## Claims

1. A magnetic control device for controlling a shutter member (11, 45) movably mounted in a tubular valve body (1) facing a flow orifice (9, 46) of the body, the device including a drive member (13, 47) of magnetic material coupled to the shutter member (11, 45) and co-operating with a magnetic field generator (33, 53) connected to a control member (35, 55), characterized in that the magnetic field generator (33, 53) is mounted inside a sleeve of non-magnetic material (21) secured to the tubular body (1), in that the sleeve (21) extends substantially along the axis of the tubular body having one end closed and an opposite end opening out to the outside of the tubular body (1), and in that the drive member (13, 47) extends outside the sleeve (21) facing the magnetic field generator (33, 53).

2. A device according to claim 1, characterized in that the drive member (13, 47) includes at least two rings (19, 51, 45) slidably mounted on the sleeve (21) and connected together by a link member (15, 49) extending in an axial direction, the magnetic field generator (33, 53) being organized to generate a field in an axial direction and possessing two axial ends disposed facing the rings (19, 51, 45) of the drive member (13, 47).

3. A device according to claim 2, characterized in that one of the rings (45) of the drive member (47) forms the shutter member (45).

4. An adjustable flow rate filler spout comprising a tubular body (1) having a terminal flow orifice (9) associated with a first shutter member forming a valve member (11), characterized in that it includes an upstream flow orifice (46) defined by an intermediate constriction (4) in the tubular body (1) and associated with a second shutter member forming a flow rate regulation member (45), the first and second shutter members being controlled by a magnetic control device, according to anyone of claims 1 to 3.

5. An filler spout according to claim 4, characterized in that the drive members (13, 47) are slidably mounted on the sleeve (21) facing the corresponding magnetic field generators (33, 53).

6. A filler spout according to claim 5, characterized in that the control member (35) of one of the two magnetic field generators (33) is slidably mounted in the control member (55) of the other magnetic field generator (53).

## Patentansprüche

1. Magnetsteuereinrichtung eines Verschlußorganes (11, 45), das in einem rohrförmigen Ventilgehäuse (1) gegenüber einer Abflußöffnung (9, 46) dieses Gehäuses beweglich angebracht ist, wobei die Einrichtung ein mit dem Verschlußorgan (11, 45) gekoppeltes Steuerorgan (13, 47) aus einem magnetischen Material hat und mit einem Magnetfelderzeuger (33, 53) zusammenarbeitet, der mit einem Stellorgan (35, 55) verbunden ist, dadurch **gekennzeichnet,** daß der Magnetfelderzeuger (33, 53) im Inneren eines mit dem rohrförmigen Gehäuse (1) fest verbundenen Rohres (21) aus einem nichtmagnetischen Material angebracht ist, daß das Rohr (21) sich im wesentlichen axial zum rohrförmigen Gehäuse erstreckt und ein geschlossenes Ende und ein diesem entgegengesetztes Ende hat, das außerhalb des rohrförmigen Gehäuses (1) mündet, und daß das Steuerorgan (13, 47) sich außerhalb des Rohres (21) gegenüber dem Magnetfelderzeuger (33, 53) erstreckt.

2. Einrichtung nach Anspruch 1, dadurch **gekennzeichnet,** daß das Steuerorgan (13, 47) mindestens zwei Ringe (19, 51, 45) hat, die verschiebbar auf dem Rohr (21) angebracht sind und über ein sich in axialer Richtung erstreckendes Verbindungsorgan (15, 49) verbunden sind, wobei der Magnetfelderzeuger (33, 53) so angeordnet ist, daß er ein Feld in axialer Richtung erzeugt, und zwei axiale Enden hat, gegenüber denen die Ringe (19, 51, 45) des Steuerorgans (13, 47) angeordnet sind.

3. Einrichtung nach Anspruch 2, dadurch **gekennzeichnet,** daß einer der Ringe (45) des Steuerorgans (47) das Verschlußorgan (45) bildet.

4. Abfüllventil mit regelbarer Durchflußmenge mit einem rohrförmigen Gehäuse (1) mit einer am Ende befindlichen Abflußöffnung (9), die mit einem ersten, einen Ventilkörper (11) bildenden Verschlußorgan verbunden ist, dadurch **gekennzeichnet,** daß es eine stromaufwärts befindliche Abflußöffnung (46) hat, die durch eine Zwischeneinschnürung (4) des rohrförmigen Gehäuses (1) begrenzt ist und mit einem zweiten ein Durchflußmengenregelorgan (45) bildenden Verschlußorgan verbunden ist, wobei das erste und das zweite Verschlußorgan über eine Magnetsteuereinrichtung gemäß einem der Ansprüche 1 bis 3 gesteuert werden.

5. Abfüllventil nach Anspruch 4, dadurch **gekennzeichnet,** daß die Steuerorgane (13, 47) auf dem Rohr (21) gegenüber den entsprechenden Magnetfelderzeugern (33, 53) verschiebbar angebracht sind.

6. Abfüllventil gemäß Anspruch 5, dadurch **gekennzeichnet,** daß das Stellorgan (35) eines (33) der zwei Magnetfelderzeuger verschiebbar in dem Steuerorgan (55) des anderen Magnetfelderzeugers (53) angebracht ist.
